# EUROPEAN PATENT APPLICATION

(11) **EP 4 786 068 A1**
(43) Date of publication of application: **05.08.2026**
(21) Application number: 24872337.1
(22) Date of filing: 26.09.2024
(51) Int. Cl.: B21D 5/04, B21C 51/00, G01B 11/26

(54) **WORKPIECE BENDING ANGLE MEASURING METHOD AND BENDING MACHINE**

(30) Priority: 27.09.2023 JP 2023165230
(71) Applicant: Amada Co., Ltd., Isehara-shi, Kanagawa 259-1196 (JP)
(72) Inventor: HATANO, Ken, Isehara-shi, Kanagawa 259-1196 (JP); SATO, Jun, Isehara-shi, Kanagawa 259-1196 (JP); YAMAMOTO, Yuma, Isehara-shi, Kanagawa 259-1196 (JP)
(74) Representative: Grünecker Patent- und Rechtsanwälte PartG mbB
(86) International application number: PCT/JP2024/034315
(87) International publication number: WO 2025/070551

(57) **Abstract**

This workpiece bending angle measuring method includes: a bending process for bending a workpiece (W) by operating a bend beam (30) equipped with standard bending tools (40, 41) in a state where the workpiece (W) is fixed to a workpiece reference plane (Pw) by pressing the workpiece (W) with a top die (25) and a bottom die (15); and a measuring process for measuring the bending angle of the workpiece (W). The bend beam (30) is equipped with an angle measuring unit (60) configured to irradiate the workpiece (W) with a laser beam for measuring the bending angle. The measurement process includes a switching process for switching the direction of the laser beam emitted to the workpiece (W) depending on the bending direction of the workpiece (W) bent in the bending process.

## Description

### [TECHNICAL FIELD]

The present disclosure relates to a workpiece bending angle measuring method and a bending machine.

### [BACKGROUND ART]

A bending machine is known that includes a top die, a bottom die below and opposing the top die, and a bend beam provided behind the top and bottom dies. In this bending machine, the bend beam is swung through movements in up-down and front-rear directions while a workpiece is fixed by the top and bottom dies. An end portion of the workpiece protruding rearward from the top and bottom dies is subjected to bending (ironing and bending) by a bending tool mounted to an upper front part or a lower front part of the bend beam.

A swivel bending machine described in Patent Literature 1 includes an angle measuring system that measures a bending angle in a non-contact manner within a bend beam having a C-shaped cross section. The angle measuring system includes a first angle measuring unit disposed below a reference plane on which a workpiece is placed, and a second angle measuring unit disposed above the reference plane on which the workpiece is placed. The first angle measuring unit has a measurement range above the reference plane, while the second angle measuring unit has a measurement range below the reference plane.

### [Citation List]

### [Patent Literature]

[Patent Literature 1] International Publication No. WO2017/181208

### [SUMMARY OF INVENTION]

According to a method disclosed in Patent Literature 1, however, when performing bending twice or more, a laser beam emitted from an angle measuring unit may be blocked by a bent region of a workpiece bent in the preceding bending process, making it impossible to measure the angle of the bent region to be measured.

One aspect of one or more embodiments provides a workpiece bending angle measuring method including a bending process for bending a workpiece by operating a bend beam equipped with a bending tool in a state where the workpiece is fixed to a workpiece reference plane by pressing the workpiece with a top die and a bottom die, and a measuring process for measuring the bending angle of the workpiece. The bend beam is equipped with an angle measuring unit configured to irradiate the workpiece with detection light for measuring the bending angle, and the measuring process includes a switching process of switching the direction of the detection light emitted to the workpiece depending on the bending direction of the workpiece bent in the bending process.

According to this workpiece bending angle measuring method, the direction of the laser beam can be switched depending on the bending direction of the workpiece bent in the bending process. This can prevent the laser beam emitted from the angle measuring unit from being blocked by the bent region of the workpiece bent in the preceding bending process.

According to the workpiece bending angle measuring method of one or more embodiments, the bent region of the workpiece to be measured can be appropriately irradiated with a laser beam, allowing for accurate measurement of the bending angle of the workpiece.

### [BRIEF DESCRIPTION OF DRAWINGS]

[FIG. 1] FIG. 1 is a side view schematically showing the main part of a bending machine according to the present embodiment.
[FIG. 2] FIG. 2 is a front view schematically showing the main part of a bend beam of the bending machine according to the present embodiment.
[FIG. 3] FIG. 3 is a diagram showing the concept of a method for bending a workpiece W by the bending machine.
[FIG. 4] FIG. 4 is a diagram showing the concept of the method for bending the workpiece W by the bending machine.
[FIG. 5] FIG. 5 is a diagram showing the concept of the method for bending the workpiece W by the bending machine.
[FIG. 6] FIG. 6 is a diagram showing the concept of the method for bending the workpiece W by the bending machine.
[FIG. 7] FIG. 7 is a diagram showing a modification of the bending machine.

### [DESCRIPTION OF EMBODIMENTS]

Below, with reference to the drawings, a workpiece bending angle measuring method and a bending machine according to the embodiments will be described.

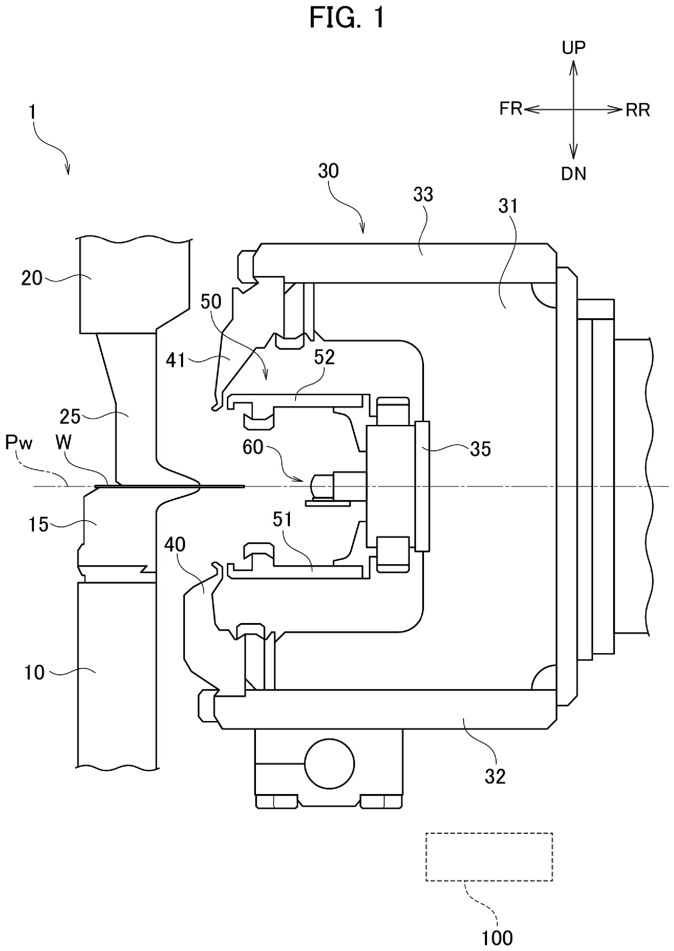

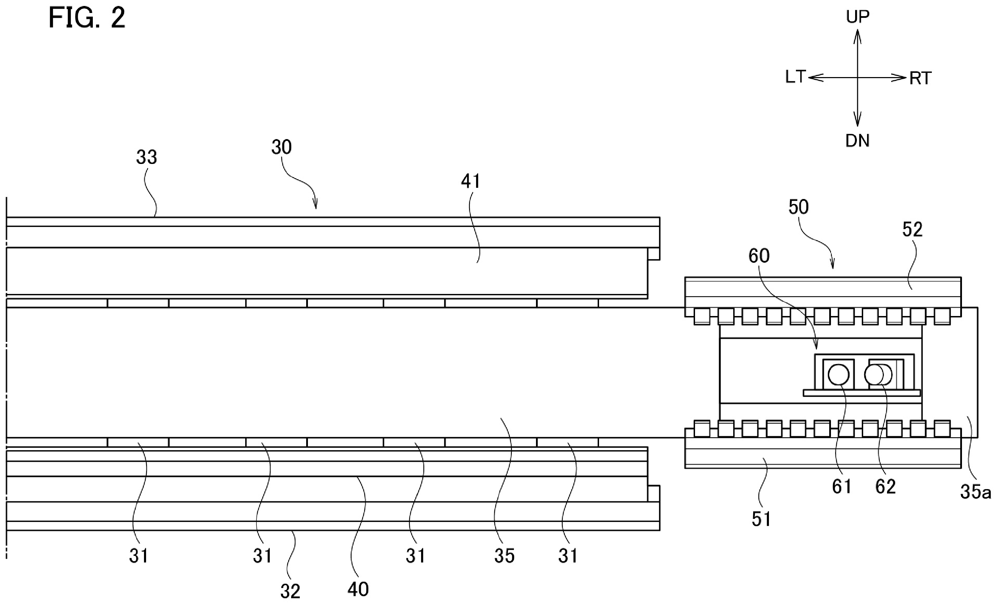

First, referring to FIGS. 1 and 2, a bending machine 1 according to the present embodiment will be described. FIG. 1 is a side view schematically showing the main part of the bending machine 1 according to the present embodiment. FIG. 2 is a front view schematically showing the main part of a bend beam 30 of the bending machine 1 according to the present embodiment. In FIG. 2, for convenience, only a right part of the bend beam 30 is depicted, and this configuration is the same as a configuration of a left part of the bend beam 30.

In describing the configuration of the bending machine 1, as directions, left-right, front-rear, and up-down directions are defined for use. The left-right direction and front-rear direction correspond to two directions that are orthogonal in a horizontal direction, while the up-down direction corresponds to a perpendicular direction. In the drawings, rightward, leftward, upward, downward, forward, and rearward are indicated as RT, LT, UP, DN, FR, and RR, respectively. In FIG. 1, the left-right direction corresponds to a perpendicular direction in a page space, and in FIG. 2, the front-rear direction corresponds to a perpendicular direction in a page space. However, these directions are merely conveniently defined directions for describing a processing machine according to the present embodiment.

The bending machine 1 is a processing machine configured to bend the workpiece W into a desired shape by performing bending (ironing and bending) on an edge of the plate-like workpiece W and is also referred to as a panel bender. In front of the bending machine 1, a manipulator (not shown) for supplying and positioning the workpiece W is disposed.

As shown in FIG. 1, the bending machine 1 includes a lower frame 10, an upper frame 20, a bottom die 15, a top die 25, a bend beam 30, and a control device 100.

The lower frame 10 is formed to be elongated along the left-right direction. On an upper portion of the lower frame 10, the bottom die 15 serving as a fixed tool is provided.

The upper frame 20 is formed to be elongated in the left-right direction. The top die 25 serving as a movable tool opposing the bottom die 15 is provided on a lower portion of the upper frame 20.

The upper frame 20 is configured to be movable in the up-down direction and is driven by a frame drive mechanism that is not shown. When the upper frame 20 is moved downward by the frame drive mechanism, the workpiece W is pressed with the bottom die 15 and the top die 25. This pressing fixes the workpiece W and positions the workpiece W on a workpiece reference plane Pw. Conversely, when the upper frame 20 is moved upward by the frame drive mechanism, the top die 25 is separated from the workpiece W, thereby releasing the fixation of the workpiece W.

The bend beam 30 is disposed behind the bottom die 15 and the top die 25. The bend beam 30 extends in the left-right direction. The bend beam 30 is configured to be movable in the front-rear and up-down directions and is driven by a bend beam drive mechanism that is not shown. The bend beam 30 operates such that a front-end side of the bend beam 30 draws an arc corresponding to movements in the up-down and the front-rear directions.

As shown in FIGS. 1 and 2, the bend beam 30 includes a plurality of vertical frames 31, a lower beam 32, and an upper beam 33.

The multiple vertical frames 31 are arranged at regular intervals in the left-right direction. Each vertical frame 31 has a C-shaped cross-section with an opening, and the opening is oriented forward.

The lower beam 32 is provided on the lower surface of the multiple vertical frames 31 and extends in the left-right direction. At the front end of the lower beam 32, a standard bending tool 40 for positive bending to positively bend the workpiece W upward is mounted.

The upper beam 33 is provided on the upper surface of the multiple vertical frames 31 and extends in the left-right direction. At the front end of the upper beam 33, a standard bending tool 41 for negative bending to negatively bend the workpiece W downward is mounted.

Within the bend beam 30, a base member 35 is provided. The base member 35 is disposed approximately in the center in the up-down direction of the vertical frames 31 and extends in the left-right direction. A horizontal dimension of the base member 35 is larger than that in the bend beam 30.

As shown in FIG. 2, the right end of the base member 35 has a right-side extension portion 35a that protrudes a certain amount to the right beyond the right end of the bend beam 30. Although not shown in FIG. 2, the left end of the base member 35 has a left-side extension portion 35a that protrudes a certain amount to the left beyond the left end of the bend beam 30.

The bend beam 30 is provided with a pair of bending units 50. Each bending unit 50 can be equipped with a dedicated tool for performing bending that can not be performed with the standard bending tools 40 and 41 mounted to the bend beam 30. With the dedicated tool mounted to the bending unit 50, bending of thin workpieces W, acute angle bending, and cut-and-raise bending of cut-and-raised portions can be performed. The horizontal size of the bending unit 50 is set to be smaller than that of the bend beam 30.

The pair of bending units 50 are each attached to the base member 35 and are divided into the right-side bending unit 50 and the left-side bending unit 50. Each bending unit 50 is positioned depending on the processing position of the workpiece W by moving the unit in the left-right direction through a drive mechanism that is not shown.

In addition, when performing bending using the standard bending tools 40 and 41 mounted to the bend beam 30, the right-side bending unit 50 is retracted to the right-side extension portion 35a of the base member 35. Similarly, the left-side bending unit 50 is retracted to the left-side extension portion 35a of the base member 35. This can prevent the pair of bending units 50 from interfering with the workpiece W, or parts of mechanisms such as the bottom die 15 and the top die 25 during bending using the standard bending tools 40 and 41.

The bending unit 50 includes a lower plate 51 and an upper plate 52 that are arranged to oppose each other vertically. The bending unit 50 has a C-shaped cross-section with an opening at the front, similarly to the bend beam 30. At the front end of the lower plate 51 and the front end of the upper plate 52 of the bending unit 50, a dedicated tool may be mounted as needed.

In the present embodiment, the bending unit 50 is attached to the base member 35 of the bend beam 30. Therefore, when performing bending using the bending unit 50 equipped with the dedicated tool, the bend beam 30 moves in the up-down and front-rear directions. The bending unit 50 operates such that the front-end side thereof draws an arc corresponding to the movements of the bend beam 30 in the up-down and front-rear directions, allowing for the bending of the workpiece W.

Within the bending unit 50, an angle measuring unit 60 is provided. The angle measuring unit 60 measures the bending angle of the workpiece W. The angle measuring unit 60 can move in the left-right direction as the bending unit 50 moves. The angle measuring unit 60 can move in the up-down and front-rear directions as the bend beam 30 moves in those directions.

The angle measuring unit 60 includes an irradiation device 61 and an imaging device 62. In FIG. 2, the irradiation device 61 is disposed on the left side, and the imaging device 62 is disposed on the right side. However, the positions of the irradiation device 61 and the imaging device 62 may be reversed.

The irradiation device 61 irradiates the workpiece W with a laser beam (an example of detection light). The irradiation device 61 irradiates the workpiece W with a planar fan-shaped laser beam emitted from a point light source or a planar rectangular laser beam emitted from a line light source. The imaging device 62 captures an image of the workpiece W irradiated with the laser beam. That is, the imaging device 62 captures an image of the reflected light of the laser beam reflected by the workpiece W. An image captured by the imaging device 62, which is the measurement result of the bending angle, is output to the control device 100.

In the present embodiment, the angle measuring unit 60 has an operation mode for switching the direction of the laser beam emitted to the workpiece W depending on the bending direction of the workpiece W bent by the bending. Details of this operation mode will be described later.

When measuring the bending angle with the angle measuring unit 60, it is preferable to perform the measurement with the dedicated tool removed from the bending unit 50. This is to prevent the laser beam emitted from the angle measuring unit 60 or the reflected light reflected by the workpiece W from being blocked by the dedicated tool.

The control device 100 includes a computer including a hardware processor such as a central processing unit (CPU), a memory, and various interfaces. The memory and various interfaces are connected to the hardware processor via a bus. By executing programs stored in the memory by the hardware processor, various functions provided by the control device 100 are achieved.

The control device 100 controls the operation of the bending machine 1. Specifically, the control device 100 controls the up-down movement of the upper frame 20, the movement of the bend beam 30 in the front-rear and up-down directions, and the movement of the pair of bending units 50 in the left-right direction, among others.

In addition, the control device 100 calculates the bending angle of the workpiece W by performing image processing based on the measurement result of the bending angle output from the angle measuring unit 60, that is, the image captured by the imaging device 62. Note that the calculation of the bending angle is not limited to being performed by the control device 100. By mounting a processing circuit on the angle measuring unit 60, the angle measuring unit 60 may calculate the bending angle of the workpiece W.

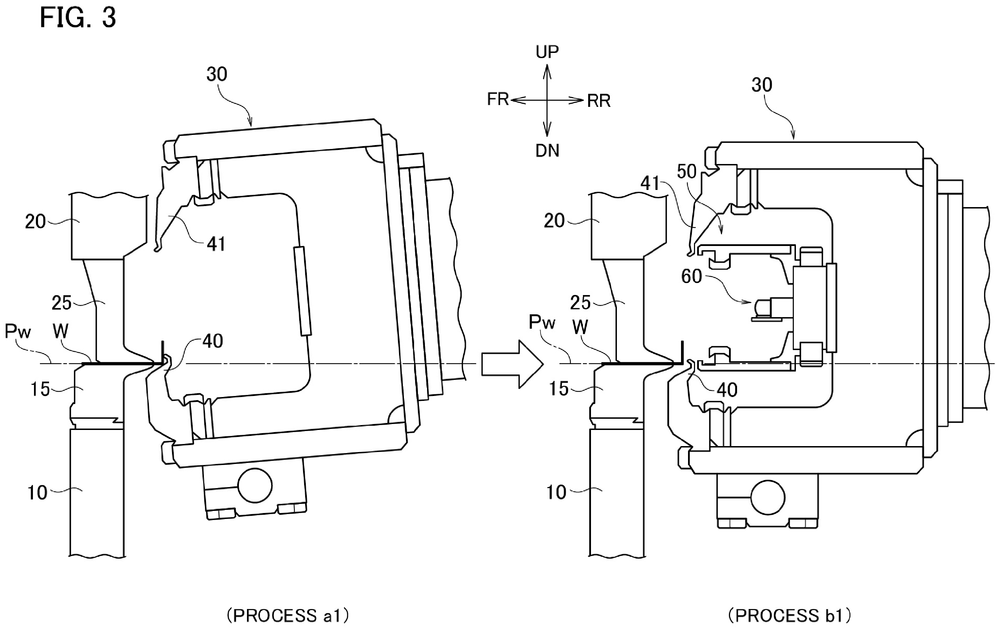

Below, with reference to FIGS. 3 to 6, a method of bending the workpiece W by the bending machine 1 will be described. This method for bending the workpiece W includes a workpiece bending angle measuring method, which is one of the features of the present embodiment.

The workpiece bending angle measuring method according to the present embodiment includes a bending process for bending the workpiece W by operating the bend beam 30 equipped with the standard bending tools 40 and 41 in a state where the workpiece W is fixed to the workpiece reference plane Pw by pressing the workpiece W with the top die 25 and the bottom die 15, and a measuring process for measuring the bending angle of the workpiece W. The bend beam 30 is equipped with the angle measuring unit 60 configured to irradiate the workpiece W with a laser beam for measuring the bending angle. The measuring process includes a switching process for switching the direction of the laser beam emitted to the workpiece W depending on the bending direction of the workpiece W bent in the bending process.

Hereinafter, the method for bending the workpiece W will be specifically described using an example situation where positive bending is performed in parallel with the edge of the workpiece W and negative bending is then performed in parallel with the edge of the workpiece W on an inner side of the workpiece than a first bending position.

First, the control device 100 operates a movable frame 22 to fix the workpiece W positioned for the positive bending, which is the first bending, with the bottom die 15 and the top die 25.

As shown in process a1 of FIG. 3, the control device 100 performs the bending process for positive bending. Specifically, the control device 100 performs positive bending on the workpiece W with the standard bending tool 40 for positive bending by operating the bend beam 30. Currently, the control device 100 controls the operation of the bend beam 30 to achieve a bent state that does not completely reach a target bending angle. When the bending of the workpiece W is completed, the control device 100 controls the posture of the bend beam 30 so that the opening of the bend beam 30 faces the front.

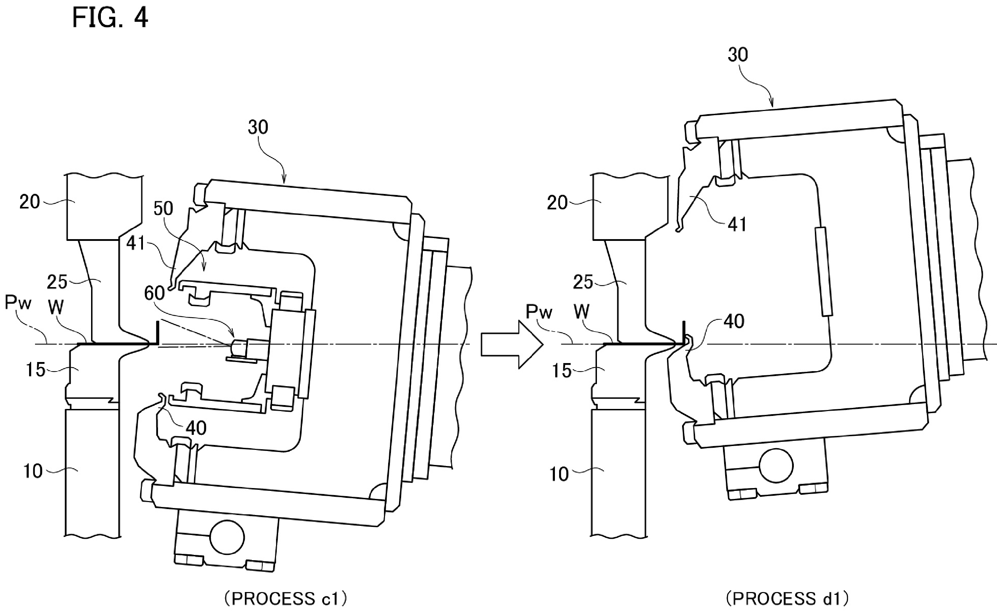

Next, as shown in process b1 of FIG. 3 and process c1 of FIG. 4, the control device 100 performs the measuring process to measure the bending angle of the workpiece W. Specifically, the control device 100 moves one of the left and right bending units 50 in the left-right direction and positions the bending unit 50 at a predetermined position (process b1). This positioning aligns the position of the angle measuring unit 60 mounted on the bending unit 50, that is, the position of the laser beam emitted from the angle measuring unit 60 to the workpiece W with the position on the workpiece W having the angle to be measured.

Additionally, the control device 100 moves the bend beam 30 to a positive bending measurement posture (process c1). The positive bending measurement posture is a posture in which the bend beam 30 is rotated so that the laser beam is directed upward at a predetermined angle, relative to a reference posture of the bend beam 30 in which the center of the laser beam coincides with the workpiece reference plane Pw. By moving the bend beam 30 to the positive bending measurement posture, the direction of the laser beam emitted to the workpiece W is switched depending on the bending direction of the workpiece (upward) (switching process).

Note that when moving the bend beam 30 to the positive bending measurement posture, the control device 100 also controls the position of the bend beam 30 so that the angle measuring unit 60 is at a predetermined reference distance from the bottom die 15 and the top die 25 (the same applies to a negative bending measurement posture described later).

The angle measuring unit 60 irradiates the workpiece W with a laser beam and captures an image of the workpiece W irradiated with the laser beam. The control device 100 identifies the bending angle of the workpiece W by image processing of a captured image.

Then, the control device 100 moves one of the bending units 50 in the left-right direction and retracts the bending unit 50 to the extension portion 35a of the base member 35.

As shown in process d1 of FIG. 4, the control device 100 performs the bending process for positive bending again. Specifically, the control device 100 operates the bend beam 30 to perform positive bending on the workpiece W using the standard bending tool 40 for positive bending. Currently, the control device 100 controls the operation of the bend beam 30 so that the bending angle of the workpiece W matches the target bending angle, based on the difference between the measured bending angle of the workpiece W and the target bending angle.

Next, the control device 100 raises the upper frame 20 and positions the workpiece W for second bending, which is negative bending. The control device 100 operates the movable frame 22 to fix the workpiece W using the bottom die 15 and the top die 25.

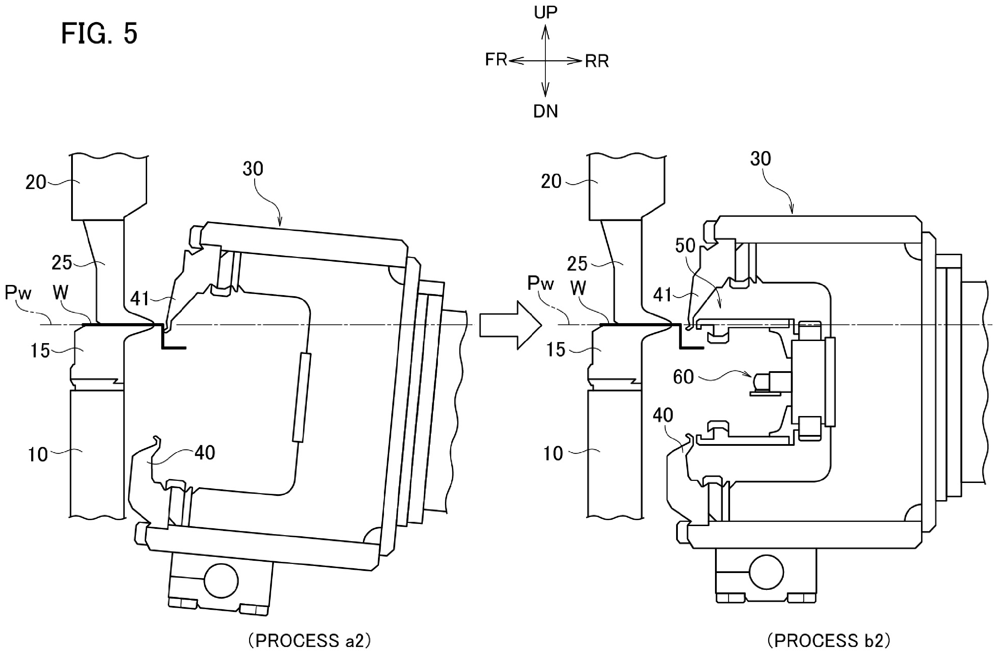

As shown in process a2 of FIG. 5, the control device 100 performs the bending process for negative bending. Specifically, the control device 100 operates the bend beam 30 to perform negative bending on the workpiece W using the standard bending tool 41 for negative bending. Currently, the control device 100 controls the operation of the bend beam 30 to achieve a bent state that does not fully reach the target bending angle. When the bending of the workpiece W is completed, the control device 100 controls the posture of the bend beam 30 so that the opening of the bend beam 30 faces the front.

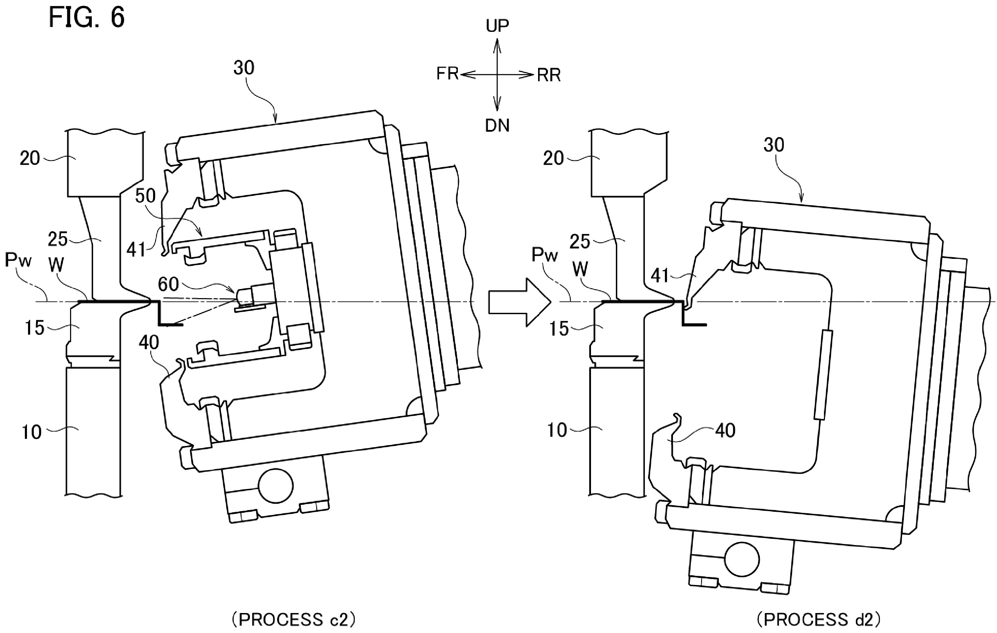

Next, as shown in process b2 of FIG. 5 and process c2 of FIG. 6, the control device 100 performs a measuring process to measure the bending angle of the workpiece W. Specifically, the control device 100 moves one of the left and right bending units 50 in the left-right direction and positions the bending unit 50 at a predetermined position (process b2).

Additionally, the control device 100 moves the bend beam 30 to the negative bending measurement position (process c2). The negative bending measurement position is a posture in which the bend beam 30 is rotated so that the laser beam is directed downward at a predetermined angle relative to the reference posture of the bend beam 30. By moving the bend beam 30 to the negative bending measurement posture, the direction of the laser beam emitted to the workpiece W is switched depending on the bending direction of the workpiece (downward) (switching process).

The angle measuring unit 60 irradiates the workpiece W with a laser beam and captures an image of the workpiece W irradiated with the laser beam. The control device 100 identifies the bending angle of the workpiece W by the image processing of the captured image.

Then, the control device 100 moves one of the bending units 50 in the left-right direction and retracts the bending unit 50 to the extension portion 35a of the base member 35.

As shown in process d2 of FIG. 6, the control device 100 performs the bending process for negative bending again. The control device 100 operates the bend beam 30 to perform negative bending on the workpiece W using the standard bending tool 41 for negative bending. Currently, the control device 100 controls the operation of the bend beam 30 so that the bending angle of the workpiece W matches the target bending angle, based on a difference between the measured bending angle of the workpiece W and the target bending angle.

Through this series of processes, the bending of the workpiece W is completed.

Thus, the workpiece bending angle measuring method according to the present embodiment includes a switching process for switching the direction of the laser beam depending on the bending direction of the workpiece W bent in the bending process. Specifically, in the case where the bending process is for positive bending to bend the workpiece W upward with the standard bending tool 40 for positive bending provided at the lower part of the front end of the bend beam 30, the switching process includes switching the laser beam upward from a state where the center of the laser beam is parallel to the workpiece reference plane Pw. On the other hand, in the case where the bending process is for negative bending to bend the workpiece W downward with the standard bending tool 41 for negative bending provided at the upper part of the front end of the bend beam 30, the switching process includes switching the direction of the laser beam downward from a state where the center of the laser beam is parallel to the workpiece reference plane Pw.

According to this method, the direction of the laser beam can be switched depending on the bending direction of the workpiece W bent in the bending process. This can prevent the laser beam emitted from the angle measuring unit 60 from being blocked by a bent region of the workpiece W bent in the preceding bending process. The bent region of the workpiece W to be measured can be appropriately irradiated with a laser beam, so that the bending angle of the workpiece W can be measured accurately.

In the present embodiment, the angle measuring unit 60 includes the irradiation device 61 configured to irradiate the workpiece W with a laser beam, and the imaging device 62 configured to capture an image of the reflected light of the laser beam emitted to the workpiece W.

According to this angle measuring unit 60, either a positive bending measurement posture or a negative bending measurement posture may be selected depending on the bending direction of the bent region having the bending angle to be measured, and there is no need to change to multiple postures for angle measurement of this bent region. Consequently, angle measurement can be efficiently performed.

In the present embodiment, the switching process is a process including rotating the bend beam 30 to which the angle measuring unit 60 is fixed.

According to this process, by rotating the bend beam 30 that operates to perform bending of the workpiece W, the angle measuring unit 60 fixed within the bend beam can also be rotated. Consequently, the direction of the laser beam can be appropriately switched depending on the bending direction of the workpiece W.

In the present embodiment, the bend beam 30 includes a moving unit disposed within the bend beam 30 and configured to be movable along a longitudinal direction of the bend beam 30. The angle measuring unit 60 is mounted on the moving unit. This moving unit is the bending unit 50 to be equipped with a dedicated tool for performing bending that can not be performed with the standard bending tools 40 and 41 mounted to the bend beam 30.

According to this configuration, the angle measuring unit 60 can be moved in conjunction with the movement of the bending unit 50 in the left-right direction. This allows the angle measuring unit 60 to be appropriately positioned relative to the measurement position of the workpiece W.

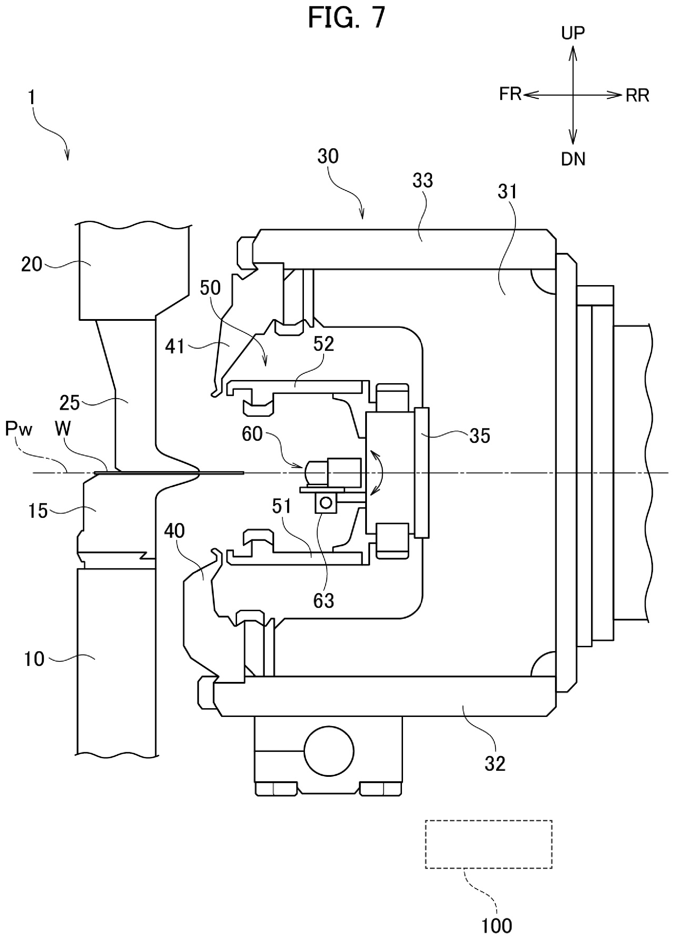

In the present embodiment, a method for switching the direction of the laser beam includes rotating the bend beam 30. As shown in FIG. 7, however, a rotation mechanism 63 for rotating the angle measuring unit 60 may be mounted on the bending unit 50. In this configuration, the switching process may include rotating only the angle measuring unit 60 while keeping the bend beam 30 stationary. Additionally, the angle measuring unit 60 may be rotated further after rotating the bend beam 30. This allows for securing a rotation angle necessary for angle measurement even if the rotation angle of the bend beam 30 is insufficient.

Furthermore, the angle measuring unit 60 may include an optical system configured to switch the direction of the laser beam emitted to the workpiece W. In this case, the switching process may include switching the direction of the laser beam emitted to the workpiece W by the optical system.

Moreover, in the embodiment described above, by mounting the angle measuring unit 60 on the bending unit 50, the angle measuring unit 60 is moved in the left-right direction through the movement of the bending unit 50 in the left-right direction. In the case of models not equipped with the bending unit 50, however, a dedicated mechanism may be provided to move the angle measuring unit 60 in the left-right direction.

In the embodiment described above, for the angle measuring units 60 mounted on the left and right bending units 50, an example is illustrated where the angle measuring unit 60 mounted on one of the bending units 50 measures the bending angle. However, the angle measuring units 60 mounted on the left and right bending units 50 may measure the bending angle. Since the bending angle can be measured at multiple positions in the bent region, longitudinal accuracy of the bending can be evaluated. However, the angle measuring unit 60 may be mounted only on one of the left and right bending units 50. Even in this case, by moving one of the bending units 50 in the left-right direction and measuring the bending angle at multiple positions, the longitudinal accuracy of the bending can be evaluated.

Moreover, the present embodiment is not limited to the workpiece bending angle measuring method but also applies to the bending machine 1 that executes this method. Specifically, the bending machine 1 includes the upper frame 20 provided with the top die 25 and movable in the up-down direction, the lower frame 10 provided with the bottom die 15 opposing the top die 25, and the bend beam 30 configured to bend the workpiece W while the workpiece W is fixed to the workpiece reference plane Pw with the top die 25 and the bottom die 15. The bend beam 30 includes the angle measuring unit 60 configured to irradiate the workpiece W with a laser beam for measuring the bending angle of the workpiece W. The angle measuring unit 60 has an operation mode for switching the direction of the laser beam emitted to the workpiece W depending on the bending direction of the workpiece W bent by the bending.

As above, the present embodiment has been described, but it should not be understood that the discussions and drawings that form part of this embodiment limit the embodiment. This embodiment will reveal various alternative forms of implementation, examples, and operational techniques to those skilled in the art.

The disclosure of this application relates to the subject matter described in Japanese Patent Application No. 2023-165230, filed with the Japan Patent Office on September 27, 2023, and all its disclosures are incorporated herein by reference.

## Claims

1. A workpiece bending angle measuring method comprising:
a bending process for bending a workpiece by operating a bend beam equipped with a bending tool in a state where the workpiece is fixed to a workpiece reference plane by pressing the workpiece with a top die and a bottom die; and
a measuring process for measuring the bending angle of the workpiece,
the bend beam being equipped with an angle measuring unit configured to irradiate the workpiece with detection light for measuring the bending angle,
the measuring process including:
a switching process for switching the direction of the detection light emitted to the workpiece depending on the bending direction of the workpiece bent in the bending process.

2. The workpiece bending angle measuring method according to claim 1, wherein in the case where the bending process is for positive bending including bending the workpiece upward with a bending tool for positive bending provided at a lower part of a front-end side of the bend beam,
the switching process includes switching the detection light upward from a state where the center of the detection light is parallel to the workpiece reference plane, and
in the case where the bending process is for negative bending including bending the workpiece downward with a bending tool for negative bending provided at an upper part of the front-end side of the bend beam,
the switching process includes switching the detection light downward from the state where the center of the detection light is parallel to the workpiece reference plane.

3. The workpiece bending angle measuring method according to claim 1, wherein the angle measuring unit includes:
an irradiation device configured to irradiate the workpiece with the detection light, and
an imaging device configured to capture an image of the workpiece irradiated with the detection light.

4. The workpiece bending angle measuring method according to any one of claims 1 to 3, wherein the switching process includes rotating the bend beam.

5. The workpiece bending angle measuring method according to any one of claims 1 to 3, wherein the switching process includes rotating only the angle measuring unit while keeping the bend beam stationary.

6. The workpiece bending angle measuring method according to any one of claims 1 to 3, wherein the bend beam includes:
a moving unit disposed within the bend beam and configured to be movable along a longitudinal direction of the bend beam, and
the angle measuring unit is mounted on the moving unit.

7. The workpiece bending angle measuring method according to claim 6, wherein the moving unit is a unit to be equipped with a dedicated tool for performing bending that is not achievable with the bending tool mounted to the bend beam.

8. The workpiece bending angle measuring method according to any one of claims 1 to 3, wherein the angle measuring unit includes:
an optical system configured to switch the direction of the detection light emitted to the workpiece, and
the switching process includes:
switching, by the optical system, the direction of the detection light emitted to the workpiece.

9. A bending machine comprising:
an upper frame provided with a top die and movable in an up-down direction;
a lower frame provided with a bottom die opposing the top die; and
a bend beam configured to bend the workpiece in a state where the workpiece is fixed to a workpiece reference plane with the top die and the bottom die,
the bend beam including an angle measuring unit configured to irradiate the workpiece with detection light for measuring the bending angle of the workpiece,
the angle measuring unit having an operation mode for switching the direction of the detection light emitted to the workpiece depending on the bending direction of the workpiece bent by bending.
